Europäisches Patentamt

European Patent Office

Office européen des brevets

(11) Publication number: **0 436 405 A1**

## (12) EUROPEAN PATENT APPLICATION

(21) Application number: 90402957.6

(22) Date of filing: **19.10.90**

(51) Int. Cl.⁵: **H02N 11/00**

(30) Priority: **02.01.90 US 459441**

(43) Date of publication of application:
**10.07.91 Bulletin 91/28**

(84) Designated Contracting States:
**DE FR GB IT**

(71) Applicant: **Taylor, James Robert**
**14 Forde Street, Kippa Ring**
**4021 Queensland(AU)**

(72) Inventor: **Taylor, James Robert**
**14 Forde Street, Kippa Ring**
**4021 Queensland(AU)**

(74) Representative: **Phélip, Bruno**
**c/o Cabinet Harlé & Phélip 21, rue de La**
**Rochefoucauld**
**F-75009 Paris(FR)**

(54) **Electromagnetic energy propulsion engine.**

(57) The invention ELECTROMAGNETIC ENERGY
PROPULSION ENGINE discloses novel means and
methods by which intense electromagnetic fields
may be generated inside a uniquely structured and
conformed housing, the said electromagnetic fields
being expelled from the rear of the said housing in
pulses that result in corresponding pulses of thrust
being applied to the said housing, the pulses of
thrust being controllable as to the frequency and
total average thrust produced, the result being a
propulsion engine that produces and expels the fuel
it uses at velocities approaching the velocity of light.

FIGURE 3
VIEW A-A'

EP 0 436 405 A1

# ELECTROMAGNETIC ENERGY PROPULSION ENGINE

James Robert Taylor, a resident of Australia, being a citizen of the United States of America, is the inventor.

There are no known examples or applications of the combined principles and materials that are embodied in the invention or that are used for purposes similar to those of the invention.

The present invention relates to unique apparatuses and methods combined in a novel structure wherein electromagnetic field generators are mounted and affixed within a more or less cylindrical elongated housing of varying cross section, a front generator being affixed near the forward end of the housing and a rear generator being affixed in line with and toward the rear end of the housing from the position of the front generator, the two generators being more or less cylindrical and circular in configuration and having axes that are more or less coincident with each other and with that of the housing, the said housing making use of magnetic barrier materials and surface finishes on its interior side and front walls that reflect and guide magnetic field lines of force and of magnetic shielding materials for the exterior of its side and front walls that shield the regions adjacent to those walls thereby minimizing the passage through those members of magnetic fields, the rear wall of the housing being constructed of a material that is highly transparent to the passage of magnetic field lines of force, the housing being so constructed and assembled that it may be pressurized, adapted for the input of control signals, the containment of liquid gases at low temperatures and high pressures, and the containment of magnetic refrigeration devices.

Associated with and integral with the propulsion engine assembly is a magnetic refrigeration system used for removing thermal energies generated in the electrical conductors during the course of operation of the engine. An electronic control system that provides programmed control pulses of electric current to the control windings that are integrated into each of the said field generators is provided external to the engine assembly. In the operation of the engine, intense magnetic fields in the form of pulses of magnetic field energy are first generated and then caused to protrude and/or be ejected from the rear of the propulsion engine, thereby rapidly reducing the magnetic field intensity internal to the engine housing and providing pulses of forward thrust to the propulsion engine assembly.

The purpose of the propulsion engine of the invention is to perform the functions of, and hence replace, a number of existing propulsion engines including those that use fossil fuels and those known commonly as rockets and jet engines. The propulsion engine of the invention expels magnetic fields in pulses from the rear end of the engine, thereby providing for flight velocities that are limited to the velocity of light or for lesser velocities as desired. As such the purpose of the propulsion engine of the invention is to propel vehicles in space, through the atmosphere, along the surfaces of land and water and below the surface of bodies of water, and by doing so to greatly reduce the use of fossil fuels which large scale practise is contributing to the deterioration of the environment on earth in a manner that is threatening the continued wellbeing of humanity. Similarly the use of the propulsion engine of the invention can reduce reliance upon nuclear engines.

Via its mountings the propulsion engine of the invention can transfer thrust to a wide variety of vehicles in their respective modes of travel. Major benefits that will be gained by the use of the propulsion engine of the invention on flying vehicles are the reduction of noise, the cessation of use of fossil fuels with their consequent emission of carbon compounds into the atmosphere, the reduction in area required for landing and taking off, the removal of worry from people who live in the flight paths of conventional aircraft and shortening of the time required for long distance travel by enabling the flying vehicles to combine short vertical flights in the atmosphere with longer distance high velocity orbital flights through space above the atmosphere.

In its normal use in a vehicle designed to travel along the surface of the earth the propulsion engine of the invention will be so mounted as to project its expelled electromagnetic fields upward and outward from the said vehicle at an appropriate angle to the surface of the roadway or water so as to provide a component of thrust along the surfaces of the roadway or the body of water and yet not adversely affect other nearby surface vehicles or travellers in other such vehicles.

When the engine is used in vehicles designed to travel submerged in water the benefits to be gained include the elimination of the use of nuclear engines and fossil fuel burning engines, the obtaining of higher speeds and independence of operation relative to depth and water pressure plus quietness of propulsion by elimination of propellers and freedom from detection because of dispersion of the magnetic field pulses in the water.

In carrying out the invention, it is proposed to provide a propulsion engine that produces its own fuel in the form of pulses of magnetic energy fields that are caused to exist as regions of intense curvature in that part of the space-time continuum that exists inside the engine housing, the field being caused to move through the continuum as it is expelled from the housing. The expulsion of magnetic energy fields from the engine housing is accompanied by a rapid reduction of magnetic field intensity inside the housing, thereby imparting a forward thrust to the said engine.

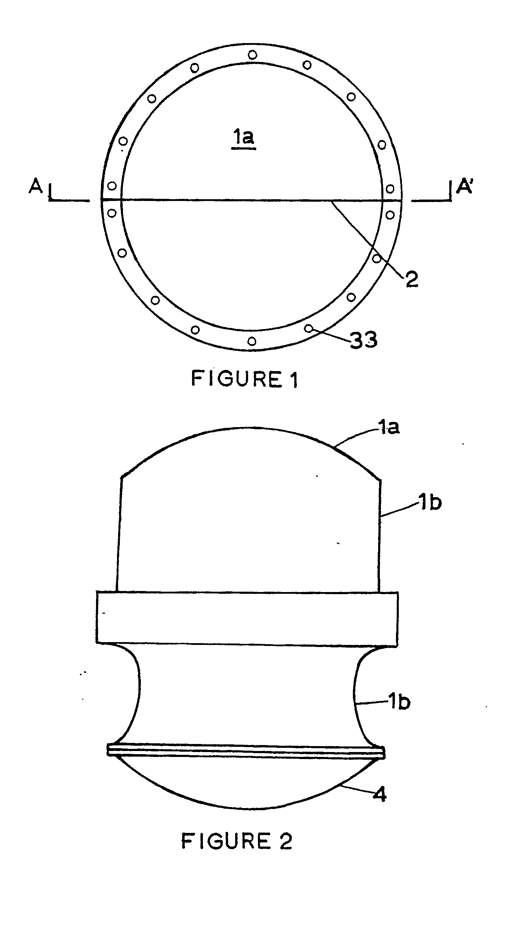

FIG. 1 is an end view of the engine assembly looking along the axis toward the front of the engine and showing where section A-A' is taken through the engine.

FIG. 2 is a side view of the engine assembly.

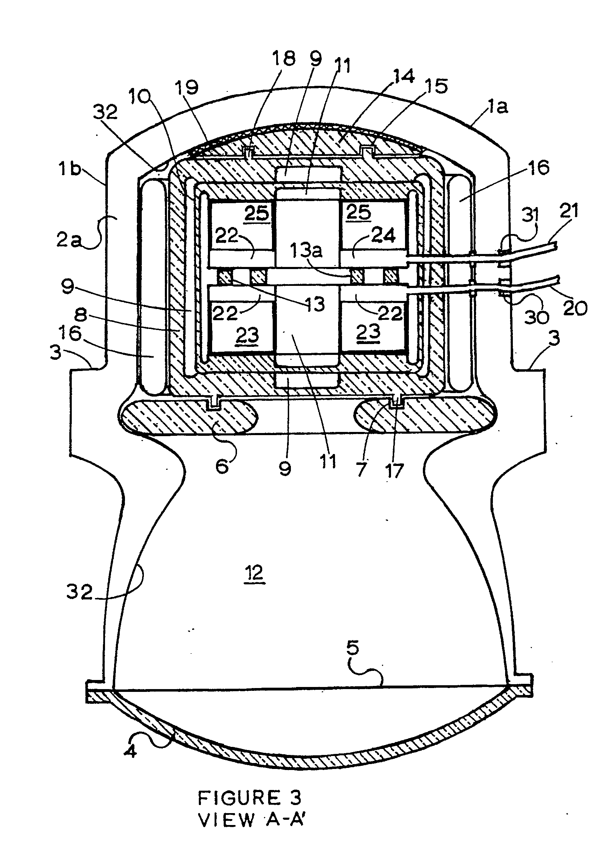

FIG. 3 is sectional view A-A', showing the propulsion engine assembly in cross section and consisting of the two magnetic field generators mounted inside the engine housing according to the invention, with a magnetic refrigeration system that operates from the pulses of magnetic field energy generated by field generator coils inside the engine housing.

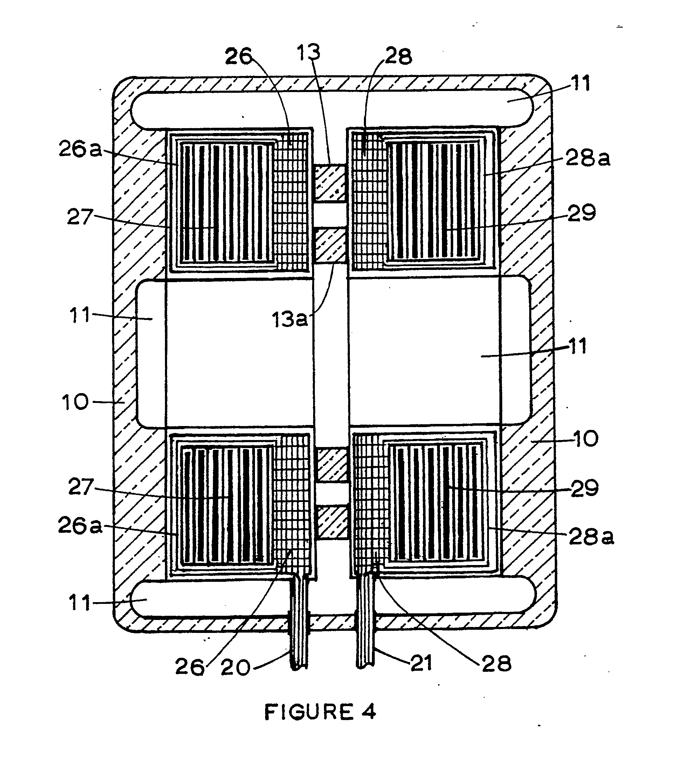

Fig. 4 is an enlarged view of the two magnetic field generators mounted inside their liquid gas vessel and minus the shroud, the anvils of the liquid gas vessel being shown pressing against the outer ends of the cylindrical field generators to restrain them from outward movement, each field generator consisting of contiguous but independent electromagnetic field generating coils, the independent coils comprising those that are constructed of multiple turns of a conventional electric current conductor material such as copper and those members that are comprised of multiple independent circular loops of supercontucting materials such as Type II superconductors.

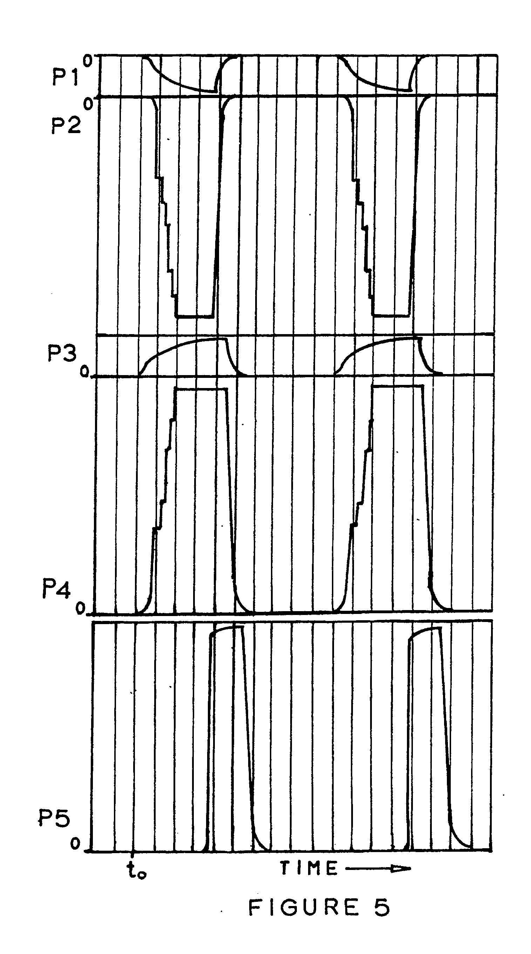

FIG. 5 is a graph showing the sequence of pulses used to initiate and terminate the superconducting states of the superconductors in those variations of the rear and front mounted field generators depicted in the invention. Also shown are the respective superconductor electric current pulses generated by the front mounted and by the rear mounted field generators and the pulse of thrust generated once each cycle of operation of the propulsion engine.

A number of the aspects of the invention may be varied and still obtain the pulses of thrust due to the rate of reduction of magnetic field intensity inside the engine housing and the rearward emission or extension of pulses of magnetic field energy claimed in the invention. All such working variations are embodied in the concepts of the invention along with the means and methods for effecting such variations, only one combination of which is described. One particular version of the invention considered to be the best method of achieving the controlled pulses of forward thrust from the rapid reduction of field energy inside the engine housing and rearward emission of pulses of magnetic field energy through the rear wall is described here.

Referring to the form of the invention shown in FIGS. 1 through 4 and to FIG. 5 for the electric current pulses and forward thrust pulses, a housing constructed of front walls 1a, side walls 1b, and rear wall 4 is shown, the front walls 1a and cylindrical side walls 1b being constructed of two halves that are joined during assembly along line 2, the rear wall 4 being one piece of material and being joined to the assembled side walls 1b along line 5. In the form shown the front walls 1a and side walls 1b are constructed of layered materials, the inside layer 32 consisting of material that is capable of guiding magnetic field lines of force along its surfaces, the outer layer consisting of magnetic shield material capable of minimizing the transmission through it of magnetic fields. The rear wall 4 is constructed of an electrically nonconducting material such as high alumina porcelain that is capable of permitting the transmission of magnetic fields through it to the outside of the engine housing. Threaded bolt holes 33 are provided for joining the propulsion engine assembly onto a vehicle to which the engine transmits pulses of thrust during its operation.

The combined structure of the high alumina porcelain engine support ring 6, the high alumina porcelain liquid gas shroud 8, the high alumina porcelain low temperature liquid gas vessel 10, the high alumina porcelain thrust impact anvil 14, the impact pad 19 and the engine housing walls 1a and 1b is such that when assembled they serve together to resist and contain the repulsive force generated by the opposing magnetic fields of the two magnetic field generators during the operation of the engine. Ceramic spacer rings 13 and 13a serve to determine the distance between the rear field generator containing coils 22 and 23 and the front field generator containing coils 24 and 25.

The liquid gas shroud has front and rear indexing rings, rear index ring 7 being caused at assembly to protrude into index cavity 17 of support ring 6 when front index ring 18 protrudes into and indexes with location cavity 15 in impact anvil 14. Magnetic refrigeration chamber 16 is essentially cylindrical and is positioned in the region between the outer periphery of the liquid gas shroud 8 and the inner surface 32 of the engine side walls 1b.

The liquid gas in chamber 11 of the liquid gas vessel 10 cools the superconducting electrical current coils 23 and 25 having superconducting members 27 and 29 respectively, of the front magnetic field generator and the rear magnetic field generator to the same superconducting temperature. The liquid gas vessel 10 is enclosed within liquid gas shroud 8, shroud 8 containing liquid gas at a somewhat higher temperature in shroud chamber 9 than the temperature of the liquid gas that is contained in chamber 11 of vessel 10.

Conventional windings 26a and 28a are wound toroidally around superconducting members 27 and 29 respectively and have the purpose of initiating current flow in the superconductors. Conventional windings 26 and 28 are wound so as to aid in terminating electric current flow in the superconductors 27 and 29 respectively. Windings 26 and 28 may be operated in conjunction with or independent of windings 26a and 28a.

The superconducting materials that comprise the front superconducting field generator members 29 are either specially formulated in manufacture or are specially selected so that they have a critical magnetic field intensity at which they will drop out of superconduction that is marginally higher in intensity than the critical magnetic field intensity that is required to cause the superconducting members 27 of the rear magnetic field generator coil 23 to drop out of superconduction, the temperatures of the two superconducting field generator coils 23 and 25 being the same and the magnitudes of the electric currents flowing in them during superconduction being such as to give the high repelling forces required to yield usable levels of thrust when the field intensity internal to the engine housing is rapidly reduced by their being ejected from the rear of the said housing. During normal use region 12 inside the engine housing is filled and pressurized with a spark quenching gas, such as sulfur hexa-fluoride.

In the operation of the engine the associated electronic equipment is caused to simultaneously supply drive pulses P1 and P2 via the rear and front generator control cables 20 and 21 respectively to conventional conductors 26 and 26a of coil 22 and to conventional conductors 28 and 28a of coil 24. The rising electric currents flowing in toroidal windings 26a and 28a of coils 22 and 24 cause electric current to begin flowing in superconducting coils 23 and 25 respectively, the electric currents in conventional windings 26a and 28a being caused to flow in directions such that opposing magnetic fields are established by the electric currents that are induced to flow in superconducting coils 23 and 25, the said opposition taking place in the region between coils 23 and 25.

The rising magnetic field intensity generated by winding 26 of driving coil 22 and the magnetic field intensity generated by superconducting coil 23 join to reach the magnitude at which their combined effect exceeds the critical magnetic field value at which the superconduction of coil 23 will cease and the electric current flowing in coil 23 will rapidly fall. Simultaneous with the cessation of superconduction in coil 23 the flow of electric current through conventional conductor members 26 and 26a of coil 22 is caused to cease.

The combined and still rising magnetic field intensity of conventional coil 24 and of superconducting coil 25, being in opposition to the no longer supported field of coils 22 and 23 is directed along the axis of the engine housing toward the rear and proceeds to expel the magnetic field energy of coils 22 and 23 through the rear wall of the engine housing, at the same time suddenly extending itself rearward in the no-longer resisted direction. The design and operation of coils 24 and 25 is such that, immediately following the expulsion of the magnetic field energy of the field previously generated by magnetic coils 22 and 23, the electric current flowing in the coil 24 produces, in combination with the magnetic field produced by the electric current flowing in superconductors 29, a level of magnetic field intensity that exceeds the critical magnetic field intensity of the superconductors of coil 25 thereby causing superconduction to cease in coil 25 and bringing superconduction current pulse P4 to its conclusion, at which time the associated electronic control system also brings the electric current flowing in conventional coil 24 to zero magnitude and hence causing pulse P3 to cease.

The effect of the rapid fall of magnetic field intensity inside the engine housing associated with the ejection through the rear wall of the magnetic field energy of pulses P1 and P2, the sudden release of the energy in the pulses P3 and P4 allowing them to extend through the rear wall of the engine housing, and the rapid fall of P4 and P3 toward zero as the critical magnetic field intensity of coil 25 is exceeded all act together to produce the pulse of thrust P5 which acts against the propulsion engine assembly to provide a forward directed pulse P5 of propulsion force.

There is no secondary superconduction started in coil 23 superconductors 27 during the cycle. That is due to the fact that the magnetic field intensity produced by coils 24 and 25 in the region surrounding coil 23 exceeds its critical magnetic field intensity. The flow of electric current in the conventional conductor coils 22 and 24 and the fluxoids produced in the superconductors 27 and 29 of coils 23 and 25 act together to produce a small quantity of thermal energy during each cycle of operation of the engine, the said thermal energy being removed by the magnetic refrigeration system 16 that operates from the magnetic pulse energy of the engine coils 22, 23, 24, and 25 in the usual manner.

When the first thrust cycle is completed the next cycle is begun by the simultaneous application of control pulses P1 and P3 to the conventional conductors 26a and 28a of coils 22 and 24 respectively. The minimum repetition rate of the pulses of thrust generated by the engine is determined by the rate at which electronic control pulses P1 and P3 are supplied, the maximum repetition rate being determined by the design and construction of the engine assembly.

## Claims

1. An electromagnetic propulsion engine structure comprising an electromagnetic thrust generating engine with housing and associated means for controlling the operation of the engine, the engine being composed of two or more electromagnetic field generators that generate opposing magnetic fields inside and along the axis of a more or less cylindrical housing, the forward located field generator producing a rearward directed magnetic field force against which the adjacent but rearward located magnetic field generator applies pulses of magnetic field force directed toward the front of the engine assembly and having such durations that as the electrical current conduction in the rearward located magnetic field generator suddenly ceases or reduces, the continuing and rearward directed magnetic field force of the forward located magnetic field generator causes the pulse of magnetic field energy of the rearward located magnetic field generator to be ejected from the rear of the propulsion engine as the field of the front field generator is projected with a sudden action through the magnetically transparent rear wall of the engine housing, thereby providing a rapid reduction of the magnetic field intensity inside the engine housing and a corresponding combined forward thrust to the propulsion engine assembly, and via mounting means to any vehicle on which the engine is mounted.

2. A propulsion engine structure with its operation as defined in claim 1 and wherein said housing comprises means for providing magnetic barriers for reflecting and guiding magnetic fields along the front and side inner walls of the housing and also means for shielding objects and individuals located outside but in front of or beside the engine housing while providing capacity for maximum transmission or magnetic energy through the rear wall of the engine housing as pulses of magnetic field energy having a component of direction along the axis of the engine housing.

3. A propulsion engine structure with its operation as defined in claim 1 and wherein materials are chosen for inclusion in the inner structural members of the system and such members are arranged in such manner as to provide for minimum impedance to the passage of magnetic field energies inside the engine housing while providing for suitable mechanical rigidity, strength and high temperature stability with means and conformation to minimize the presence of internal ionized atmospheres.

4. A propulsion engine structure with its operation as defined in claim 1 and wherein said forward located and rearward located electromagnetic field generators are comprised of superconducting elements and means for initiating and terminating on command or by design the superconduction of electric current in the superconducting elements.

5. A propulsion engine structure with its operation as defined in claim 1 and in which two magnetic field generators incorporate and use superconducting elements such that the elements in one magnetic field generator have the ability to withstand more intense magnetic fields before ceasing superconduction than do the superconducting elements of the other magnetic field generator.

6. A propulsion engine structure with its operation as defined in claim 1 and in which arrangements are provided to cause the forward mounted magnetic field generator superconductors to continue conducting electric current for a time after the superconductors of the rearward mounted magnetic field generator have ceased to conduct electric current.

7. A propulsion engine structure with its operation as defined in claim 1 and in which means are provided to ensure that the forward mounted magnetic field generator has a rearward directed magnetic field force and that the rearward mounted magnetic field generator has a forward directed magnetic field force, the direction of such field forces being measured along the axis of the engine housing.

8. A propulsion engine structure with its operation as defined in claim 1 and which is so influenced and controlled by the times and magnitudes of electric current pulses provided by an associated electronic control assembly that the said propulsion engine is caused to generate a succession of pulses of thrust at independently determined frequencies and with independently determined times and magnitude of superconductor current flow, thereby controlling the time averaged magnitude of the total thrust obtainable from the engine and transferable to a vehicle.

9. A propulsion engine structure with its operation as defined in claim 1 in which the forward directed and the rearward directed magnetic field forces are generated principally by coils of superconductors that are held during operation at essentially the same temperature, the superconducting coils being so manufactured or selected that the superconducting elements used to generate the rearward directed magnetic field force have a somewhat higher critical magnetic field at which they will cease superconduction that do the elements that generate the forward directed field.

10. A propulsion engine structure with its operation as defined in claim 1 and which has aossicated with it magnetic refrigeration means that make use of a portion of the pulsed magnetic field energies of the engine's magnetic field generators for the purpose of cooling the liquid gases used in the engine and for removing the thermal energies produced in the operation of the pulsed magnetic field generators and the engine.

11. A propulsion engine structure with its operation as defined in claim 1 and which has conformations along its length internal to the housing and toward the rear of the housing that are designed to enhance the guidance and transmission of the magnetic field energies generated inside the engine housing, such guidance and enhancement being to assist the movement and emission of the said magnetic field energies along the inside of the housing and through the rear wall of the said housing.

12. A propulsion engine structure with its operation as defined in claim 1 that is capable of operating when in any physical position or orientation relative to a frame of reference, and when moving with any velocity or with any combination of such movements and velocities, the said movements and velocities not adversely affecting the effective operation of the said engine.

FIGURE 1

FIGURE 2

FIGURE 3
VIEW A-A'

FIGURE 4

FIGURE 5

European
Patent Office

EUROPEAN SEARCH
REPORT

Application Number

EP 90 40 2957

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y,A | PATENT ABSTRACTS OF JAPAN vol. 7, no. 112 (M-215)(1257) 17 May 1983, & JP-A-58 32976 (KUSUE MUKAY) 26 February 1983, * the whole document * | 1,2,11,12, 10,3, | H 02 N 11/00 |
| Y,A | FR-A-1 586 195  (BARBIS AYRES) * page 2, lines 10 - 37; figures 1-4, 16 * | 10,1,4,7, 8,12 | |
| A | FR-A-2 036 646  (PAQUEREAU) * page 1; figure 3 * | 1 | |

TECHNICAL FIELDS
SEARCHED (Int. Cl.5)

H 02 N
F 03 H
H 01 F

The present search report has been drawn up for all claims

| Place of search | Date of completion of search | Examiner |
|---|---|---|
| The Hague | 15 April 91 | ZANICHELLI F. |